# EUROPEAN PATENT APPLICATION

(11) **EP 4 826 632 A1**
(43) Date of publication of application: **21.10.2026**
(21) Application number: 24903373.9
(22) Date of filing: 31.10.2024
(51) Int. Cl.: G06Q 50/06, G06F 30/18, G06Q 10/20, G06F 113/14

(54) **DEVICE FOR CREATING PIPELINE NETWORK DATA WITH WATER LEAKAGE ACCIDENT HISTORY, METHOD FOR CREATING PIPELINE NETWORK DATA WITH WATER LEAKAGE ACCIDENT HISTORY, AND PROGRAM**

(30) Priority: 13.12.2023 JP 2023209784
(71) Applicant: KUBOTA CORPORATION, Osaka-shi, Osaka 530-0011 (JP)
(72) Inventor: KOBAYASHI, Yuichi, Amagasaki-shi, Hyogo 660-0095 (JP); FUJII, Hiroaki, Amagasaki-shi, Hyogo 660-0095 (JP); OKUMURA, Yuta, Amagasaki-shi, Hyogo 660-0095 (JP); KAWASAKI, Sawaka, Amagasaki-shi, Hyogo 660-0095 (JP)
(74) Representative: Müller-Boré & Partner Patentanwälte PartG mbB
(86) International application number: PCT/JP2024/038925
(87) International publication number: WO 2025/126711

(57) **Abstract**

An apparatus (1) configured to create pipeline network data with a water leakage accident history comprises a provisional candidate pipeline selection unit (24), a candidate pipeline selection unit (25), and a water leaked pipeline identification unit (26). The provisional candidate pipeline selection unit (24) selects a plurality of provisional candidate pipelines located within a predetermined distance from a location (47) of a water leakage accident. The candidate pipeline selection unit (25) selects from a plurality of provisional candidate pipelines a plurality of candidate pipelines having first attribute data (33) closest to second attribute data (37) of the water leaked pipeline. The water leaked pipeline identification unit (26) identifies a candidate pipeline closest to the location (47) of the water leakage accident in the plurality of candidate pipelines as the water leaked pipeline.

## Description

### TECHNICAL FIELD

The present disclosure relates to an apparatus configured to create pipeline network data with a water leakage accident history, a method for creating pipeline network data with a water leakage accident history, and a program.

### BACKGROUND ART

Japanese National Patent Publication No. 2021-519466 (PTL 1) discloses a method for improving piping data for a network of underground piping.

### CITATION LIST

### PATENT LITERATURE

PTL 1: Japanese National Patent Publication No. 2021-519466

### SUMMARY OF INVENTION

### TECHNICAL PROBLEM

Water leakage accident data provided from a customer such as a water utility may lack a pipeline ID serving as an identifier of a pipeline having had a water leakage accident, and insufficiently identify the address of the pipeline having had the water leakage accident. For this reason, the pipeline having had the water leakage accident, or a water leaked pipeline, cannot be identified in a pipeline network. Using such water leakage accident data to create a water leakage accident prediction model, a pipeline maintenance plan, and a pipeline renewal plan does not allow the model and plans to have high accuracy. An object of the present disclosure is to provide an apparatus configured to create pipeline network data with a water leakage accident history, a method for creating pipeline network data with a water leakage accident history, and a program, that can identify a water leaked pipeline more accurately and more quickly.

### SOLUTION TO PROBLEM

The presently disclosed apparatus configured to create pipeline network data with a water leakage accident history comprises a pipeline network map creation unit, a provisional candidate pipeline selection unit, a candidate pipeline selection unit, and a water leaked pipeline identification unit. The pipeline network map creation unit is configured to map, based on locations of a plurality of pipelines and an address of a water leakage accident, the plurality of pipelines and a location of a water leakage accident corresponding to the address of the water leakage accident to create a pipeline network map. Pipeline network data includes pipeline IDs, first attribute data, and locations of the plurality of pipelines. The locations of the plurality of pipelines include latitudes and longitudes of the plurality of pipelines. Water leakage accident data includes second attribute data of a water leaked pipeline that is a pipeline having had the water leakage accident, and the address of the water leakage accident. The water leakage accident data does not include a pipeline ID of the water leaked pipeline and a latitude and longitude of the water leaked pipeline. The provisional candidate pipeline selection unit is configured to select from the plurality of pipelines a plurality of provisional candidate pipelines located within a predetermined distance from the location of the water leakage accident in the pipeline network map. The candidate pipeline selection unit is configured to select from the plurality of provisional candidate pipelines a plurality of candidate pipelines having the first attribute data closest to the second attribute data of the water leaked pipeline. The water leaked pipeline identification unit is configured to identify a candidate pipeline closest to the location of the water leakage accident in the plurality of candidate pipelines as the water leaked pipeline.

The presently disclosed method for creating pipeline network data with a water leakage accident history comprises the step of mapping, based on locations of a plurality of pipelines and an address of a water leakage accident, the plurality of pipelines and a location of a water leakage accident corresponding to the address of the water leakage accident to create a pipeline network map. Pipeline network data includes pipeline IDs, first attribute data, and locations of the plurality of pipelines. The locations of the plurality of pipelines include latitudes and longitudes of the plurality of pipelines. Water leakage accident data includes second attribute data of a water leaked pipeline that is a pipeline having had the water leakage accident, and the address of the water leakage accident. The water leakage accident data does not include a pipeline ID of the water leaked pipeline and a latitude and longitude of the water leaked pipeline. The presently disclosed method for creating pipeline network data with a water leakage accident history further comprises the steps of: selecting from the plurality of pipelines a plurality of provisional candidate pipelines located within a predetermined distance from the location of the water leakage accident in the pipeline network map; selecting from the plurality of provisional candidate pipelines a plurality of candidate pipelines having the first attribute data closest to the second attribute data of the water leaked pipeline; and identifying a candidate pipeline closest to the location of the water leakage accident in the plurality of candidate pipelines as the water leaked pipeline.

The presently disclosed program causes a processor to perform each step of the presently disclosed method for creating pipeline network data with a water leakage accident history.

### ADVANTAGEOUS EFFECTS OF INVENTION

The presently disclosed apparatus configured to create pipeline network data with a water leakage accident history, method for creating pipeline network data with a water leakage accident history, and program can identify a water leaked pipeline more accurately and more quickly.

### BRIEF DESCRIPTION OF DRAWINGS

Fig. 1 is a schematic diagram showing a hardware configuration of an apparatus configured to create pipeline network data with a water leakage accident history according to an embodiment.
Fig. 2 is a block diagram for illustrating a functional configuration of the apparatus configured to create pipeline network data with a water leakage accident history according to an embodiment.
Fig. 3 shows an example of a data structure of pipeline network data.
Fig. 4 shows an example of a data structure of water leakage accident data.
Fig. 5 shows an example of a data structure of map data.
Fig. 6 shows an example of a pipeline network map.
Fig. 7 shows a plurality of provisional candidate pipelines selected from pipelines included in a pipeline network map.
Fig. 8 shows a plurality of candidate pipelines selected from the plurality of provisional candidate pipelines.
Fig. 9 shows a water leaked pipeline identified from the plurality of candidate pipelines.
Fig. 10 shows a table of pipeline network data with a water leakage accident history that is an example of pipeline network data with a water leakage accident history.
Fig. 11 shows a pipeline network map with a water leakage accident history that is an example of pipeline network data with a water leakage accident history.
Fig. 12 shows a flowchart of a method for creating pipeline network data with a water leakage accident history.
Fig. 13 schematically shows a configuration of a system configured to create pipeline network data with a water leakage accident history according to a modification of an embodiment.

### DESCRIPTION OF EMBODIMENTS

Hereinafter, an embodiment of the present disclosure will be described. Note that identical components are identically denoted and will not be described repeatedly.

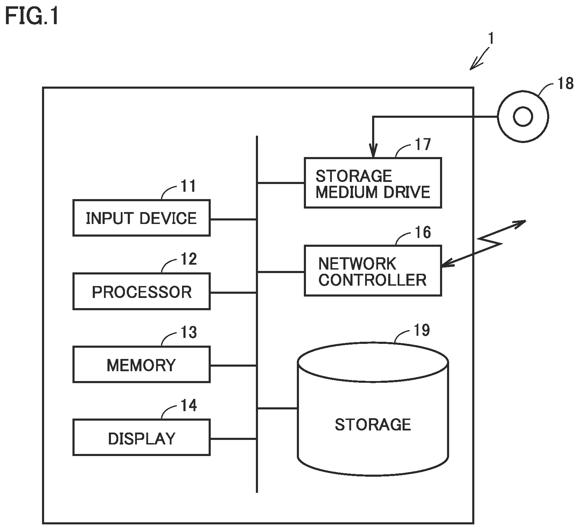

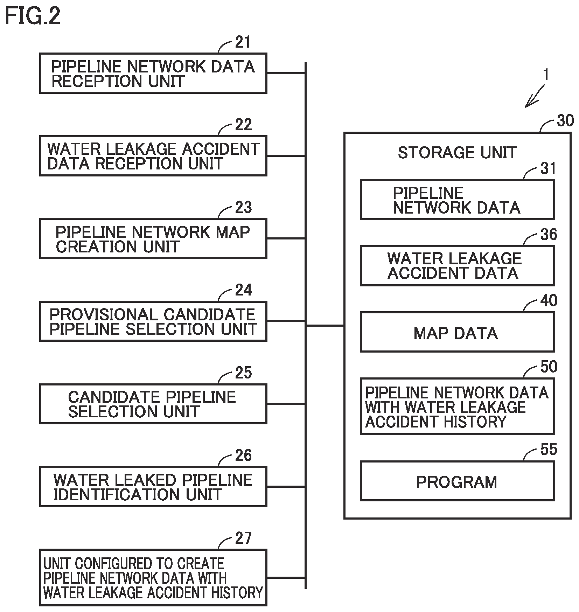

An apparatus 1 configured to create pipeline network data with a water leakage accident history will be described with reference to Figs. 1 and 2.

### <Hardware Configuration>

A hardware configuration of apparatus 1 configured to create pipeline network data with a water leakage accident history will be described with reference to Fig. 1. Apparatus 1 configured to create pipeline network data with a water leakage accident history comprises an input device 11, a processor 12, a memory 13, a display 14, a network controller 16, a storage medium drive 17, and a storage 19.

Input device 11 receives a variety of types of input operations. Input device 11 is for example a keyboard, a mouse, or a touch panel.

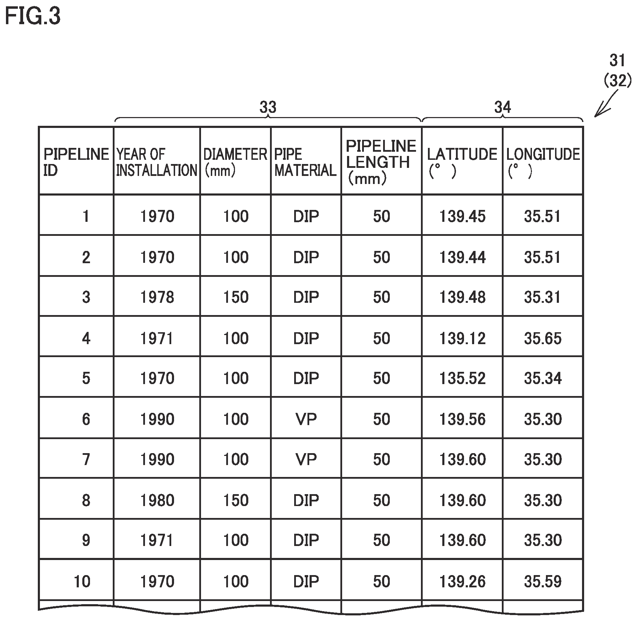

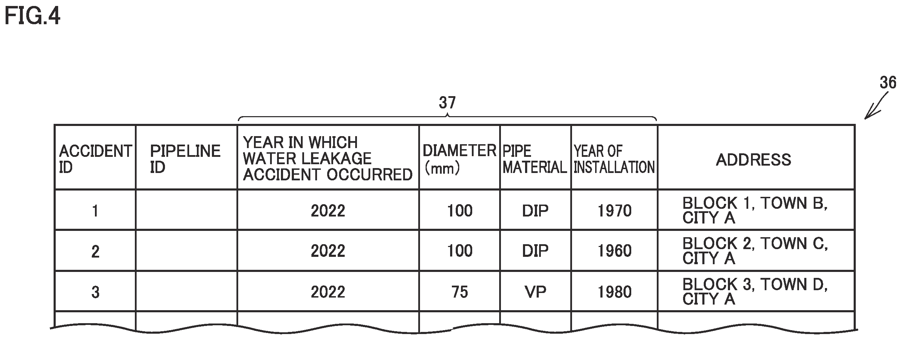

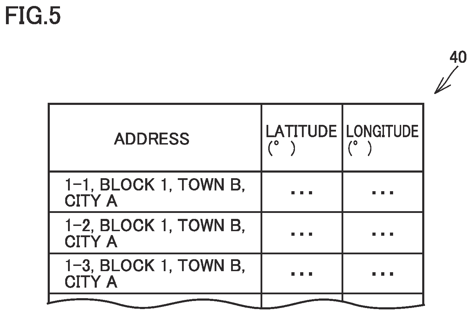

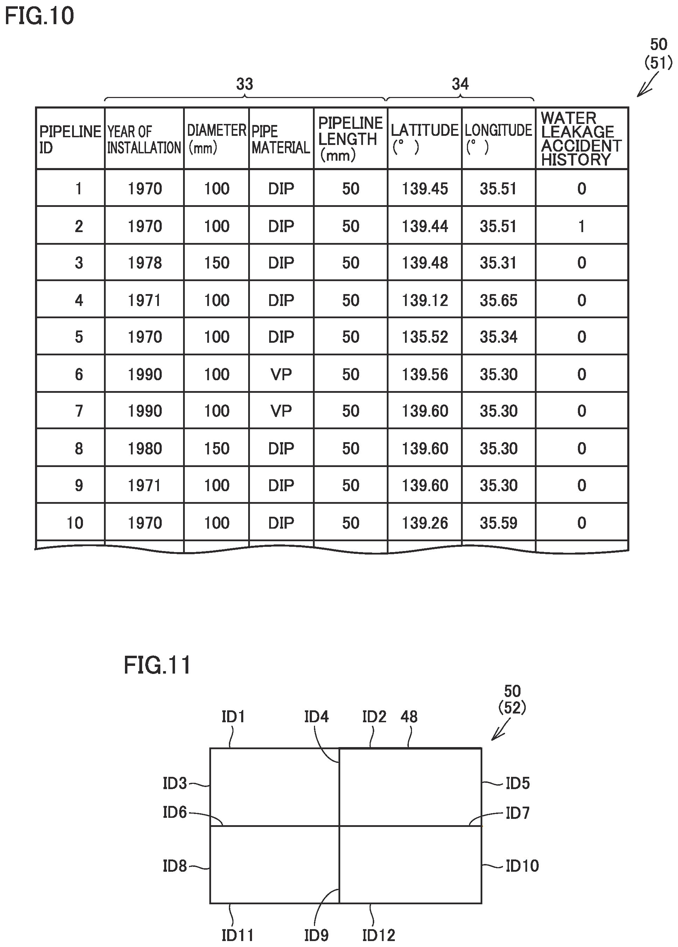

Display 14 displays pipeline network data 31 (see Fig. 3), water leakage accident data 36 (see Fig. 4), map data 40 (see Fig. 5), and other similar information necessary for processing in apparatus 1 configured to create pipeline network data with a water leakage accident history, pipeline network data with a water leakage accident history 50 (see Figs. 10 and 11), and the like. Display 14 is for example an LCD (liquid crystal display) or an organic EL (electroluminescence) display.

Processor 12 executes a program, which will be described hereinafter, to perform a process necessary for implementing a function of apparatus 1 configured to create pipeline network data with a water leakage accident history. Processor 12 is configured for example by a CPU (central processing unit) or a GPU (graphics processing unit).

Memory 13 provides a storage area for temporarily storing program code, a work memory, and the like when processor 12 executes the program. Memory 13 is for example a volatile memory device such as a DRAM (dynamic random access memory), an SRAM (static random access memory), etc.

Network controller 16 transmits and receives programs or data to and from an external device (not shown) via a communication network (not shown) such as the Internet or an intranet. For example, network controller 16 transmits pipeline network data with water leakage accident history 50 (see Figs. 10 and 11) to the external device via the communication network. Network controller 16 may receive pipeline network data 31 (see Fig. 3) and water leakage accident data 36 (see Fig. 4) from a customer such as a water utility via the communication network. Network controller 16 complies with any communication system such as Ethernet^{®}, wireless LAN, or Bluetooth^{®}, for example.

Storage medium drive 17 is a device that reads a program or data stored in a storage medium 18. Storage medium drive 17 may further be a device that writes a program or data to storage medium 18. Storage medium 18 is a non-transitory storage medium and stores a program or data in a non-volatile manner. Storage medium 18 is for example an optical disk (e.g., a CD-ROM or a DVD-ROM) or a similar optical storage medium, a flash memory, a USB memory or a similar semiconductor storage medium, an FD (floppy disk) or a storage tape or a similar magnetic storage medium, or an MO (magneto-optical) disk or a similar magneto-optical storage medium. Pipeline network data 31 (see Fig. 3) and water leakage accident data 36 (see Fig. 4) may be provided from a customer such as a water utility using storage medium 18. Pipeline network data with water leakage accident history 50 (see Figs. 10 and 11) may be stored in storage medium 18.

Storage 19 is for example a non-volatile memory device such as a hard disk or an SSD (solid state drive). Storage 19 stores pipeline network data 31 (see Fig. 3), water leakage accident data 36 (see Fig. 4), map data 40 (see Fig. 5), pipeline network data with water leakage accident history 50 (see Figs. 10 and 11), a program 55, and the like. Program 55 is executed by processor 12 to implement a function of apparatus 1 configured to create pipeline network data with a water leakage accident history. Program 55 may be stored and distributed in non-transitory storage medium 18, and installed in storage 19. Program 55 may be downloaded via the Internet or an intranet to apparatus 1 configured to create pipeline network data with a water leakage accident history.

In the present embodiment, a general-purpose computer (processor 12) executes program 55 to implement a function of apparatus 1 configured to create pipeline network data with a water leakage accident history by way of example. Apparatus 1 configured to create pipeline network data with a water leakage accident history may have a function partially or entirely implemented using an integrated circuit such as an ASIC (application specific integrated circuit) or an FPGA (field programmable gate array).

### <Functional Configuration>

An example of a functional configuration of apparatus 1 configured to create pipeline network data with a water leakage accident history will now be described with reference to Fig. 2. Apparatus 1 configured to create pipeline network data with a water leakage accident history comprises a pipeline network data reception unit 21, a water leakage accident data reception unit 22, a pipeline network map creation unit 23, a provisional candidate pipeline selection unit 24, a candidate pipeline selection unit 25, a water leaked pipeline identification unit 26, a unit 27 configured to create pipeline network data with a water leakage accident history, and a storage unit 30.

Pipeline network data reception unit 21 receives pipeline network data 31 from a customer such as a water utility. Pipeline network data reception unit 21 outputs pipeline network data 31 to storage unit 30. Pipeline network data 31 is stored in storage unit 30.

Referring to Fig. 3, pipeline network data 31 is for example a pipeline network data table 32. Pipeline network data 31 includes pipeline IDs, first attribute data 33, and locations 34 of a plurality of pipelines configuring a pipeline network. Each pipeline ID is an identifier of a pipeline. Each piece of first attribute data 33 is attribute data of a pipeline, and for example includes a diameter, a pipe material, and a year of installation of the pipeline. Each diameter is a diameter of a pipe configuring a pipeline. Each pipe material is a material of a pipe configuring a pipeline, and may be referred to as a pipe type. The pipe material includes a ductile iron pipe (DIP), a cast iron pipe (CIP), an unplasticized poly vinyl chloride pipe (VP), and a steel pipe (SP). Each year of installation is a year in which a pipeline was installed, such as a year in which the pipeline was buried in the ground. First attribute data 33 of each pipeline may further include a pipeline length indicating a length of the pipeline. Location 34 of each pipeline includes a latitude and longitude of the pipeline.

Water leakage accident data reception unit 22 receives water leakage accident data 36 from a customer such as a water utility. Water leakage accident data reception unit 22 outputs water leakage accident data 36 to storage unit 30. Water leakage accident data 36 is stored in storage unit 30.

Referring to Fig. 4, water leakage accident data 36 includes an accident ID, a pipeline ID of a pipeline having had a water leakage accident, hereinafter also referred to as a water leaked pipeline, second attribute data 37, and an address of the water leakage accident. An accident ID is an identifier of a water leakage accident. A pipeline ID of water leakage accident data 36 is a pipeline ID of pipeline IDs of pipeline network data 31 shown in Fig. 3 that identifies a water leaked pipeline. Second attribute data 37 for example includes a diameter, a pipe material, and a year of installation of a water leaked pipeline. Second attribute data 37 may further include a year in which a water leakage accident occurred. An address of a water leakage accident is an address of a location of the water leakage accident.

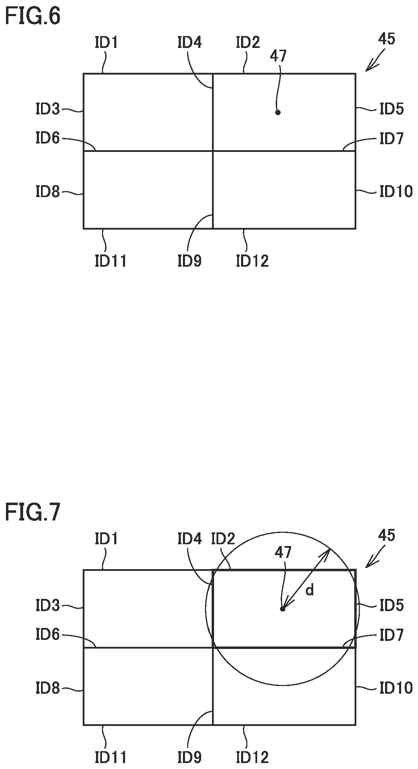

Pipeline network map creation unit 23 maps, based on locations 34 of the plurality of pipelines (see Fig. 3) and an address of a water leakage accident (see Fig. 4), the plurality of pipelines and a location 47 of a water leakage accident corresponding to the address of the water leakage accident to create a pipeline network map 45 (see Fig. 6). Specifically, pipeline network map creation unit 23 reads pipeline network data 31, water leakage accident data 36, and map data 40 from storage unit 30. Referring to Fig. 5, map data 40 includes an address, and a latitude and a longitude. Map data 40 is provided from a public institution or the like through the Internet or storage medium 18, such as through a geographic information system (GIS) or the like, and stored in storage unit 30. Pipeline network map creation unit 23 refers to latitudes and longitudes of pipeline network data 31 and latitudes and longitudes of map data 40 to map a pipeline network composed of the plurality of pipelines on a map. Pipeline network map creation unit 23 refers to an address of water leakage accident data 36 and an address of map data 40 to map location 47 of a water leakage accident on the map. Thus, pipeline network map creation unit 23 creates pipeline network map 45.

As shown in Fig. 4, water leakage accident data 36 provided from a customer may lack a pipeline ID serving as an identifier of a water leaked pipeline, and insufficiently specify the address of the water leaked pipeline. For example, water leakage accident data 36 provided from a customer may not include a pipeline ID of a water leaked pipeline and a latitude and a longitude of the water leaked pipeline. Water leakage accident data 36 provided from a customer may not specify an address of a water leakage accident for a street number. Furthermore, an area with a low population density may not have an address set sufficiently in detail to identify a pipeline. For this reason, directly reflecting in pipeline network data 31 water leakage accident data 36 provided from a customer may result in location 47 of a water leakage accident deviating from a pipeline, as shown in Fig. 6, and fail to identify the water leaked pipeline.

For example, as shown in Fig. 4 for an accident ID 1, when water leakage accident data 36 does not include a pipeline ID of a water leaked pipeline and only specifies an address of a water leakage accident for a block, pipeline network map creation unit 23 designates a center location of the area of the block as location 47 of the water leakage accident. Location 47 of the water leakage accident deviates from a pipeline, and the water leaked pipeline cannot be identified. Even if water leakage accident data 36 provided from a customer lacks a pipeline ID serving as an identifier of a water leaked pipeline and insufficiently identifies the address of the water leaked pipeline, apparatus 1 configured to create pipeline network data with a water leakage accident history can identify the water leaked pipeline with higher accuracy by provisional candidate pipeline selection unit 24, candidate pipeline selection unit 25, and water leaked pipeline identification unit 26, as will described hereinafter.

A water leaked pipeline has a high probability of being located near location 47 of a water leakage accident. Accordingly, as shown in Fig. 7, provisional candidate pipeline selection unit 24 selects from the plurality of pipelines included in pipeline network data 31 a plurality of provisional candidate pipelines located within a predetermined distance d from location 47 of the water leakage accident in pipeline network map 45. Predetermined distance d is for example any distance from 50 m to 200 m. In Fig. 7, for example, four provisional candidate pipelines (pipeline ID 2, pipeline ID 4, pipeline ID 5, and pipeline ID 7) are selected.

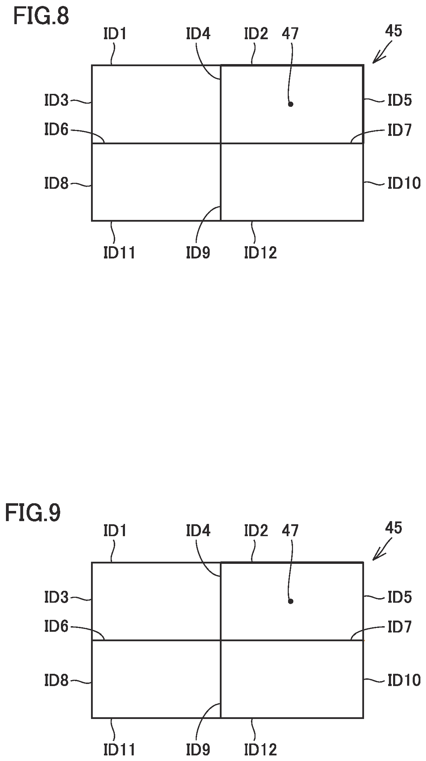

It is highly probable that the water leaked pipeline is one of the plurality of provisional candidate pipelines having first attribute data 33 closest to second attribute data 37 of the water leaked pipeline. Accordingly, as shown in Fig. 8, candidate pipeline selection unit 25 selects from the plurality of provisional candidate pipelines a plurality of candidate pipelines having first attribute data 33 closest to second attribute data 37 of the water leaked pipeline. For example, candidate pipeline selection unit 25 compares first attribute data 33 of the plurality of provisional candidate pipelines with second attribute data 37 of the water leaked pipeline, and selects as a plurality of candidate pipelines any of the plurality of provisional candidate pipelines having a diameter, a pipe material, and a year of installation that match the diameter, pipe material, and year of installation of the water leaked pipeline. In Fig. 8, for example, two candidate pipelines (pipeline ID 2 and pipeline ID 5) are selected.

The water leaked pipeline has a high probability of being located near location 47 of the water leakage accident. Accordingly, as shown in Fig. 9, water leaked pipeline identification unit 26 identifies a candidate pipeline closest to location 47 of the water leakage accident in the plurality of candidate pipelines as the water leaked pipeline. In Fig. 9, for example, pipeline ID 2 is identified as the water leaked pipeline.

Unit 27 configured to create pipeline network data with a water leakage accident history creates pipeline network data with water leakage accident history 50 by adding to pipeline network data 31 a water leakage accident history indicating that the identified candidate pipeline of the plurality of pipelines is the water leaked pipeline. Pipeline network data with water leakage accident history 50 may be a table 51 of pipeline network data with a water leakage accident history (see Fig. 10), or may be a pipeline network map 52 with a water leakage accident history (see Fig. 11). Table 51 of pipeline network data with a water leakage accident history and pipeline network map 52 with a water leakage accident history each include pipeline IDs, first attribute data 33, locations 34, and water leakage accident histories for the plurality of pipelines.

Unit 27 configured to create pipeline network data with a water leakage accident history creates table 51 of pipeline network data with a water leakage accident history (see Fig. 10) by adding the water leakage accident history to pipeline network data table 32 (see Fig. 3). For example, unit 27 configured to create pipeline network data with a water leakage accident history adds the water leakage accident history to pipeline network data table 32 by inputting "1" in the column of the water leakage accident history at a field of the pipeline identified as the water leaked pipeline by water leaked pipeline identification unit 26, and inputting "0" in the column of the water leakage accident history at a field of a pipeline that is not identified as the water leaked pipeline.

Unit 27 configured to create pipeline network data with a water leakage accident history creates pipeline network map 52 with the water leakage accident history (see Fig. 11) from map data (see Fig. 5) and table 51 of pipeline network data with a water leakage accident history (see Fig. 10). For example, unit 27 configured to create pipeline network data with a water leakage accident history maps a pipeline network composed of a plurality of pipelines on a map with reference to latitudes and longitudes of table 51 of pipeline network data with the water leakage accident history and latitudes and longitudes of map data 40. Unit 27 configured to create pipeline network data with a water leakage accident history adds to the pipeline network map a water leaked pipeline label 48 indicating that a pipeline indicated in table 51 of pipeline network data with the water leakage accident history having "1" input in the column of the water leakage accident history at the field of the pipeline is the water leaked pipeline. Water leaked pipeline label 48 is an example of a water leakage accident history. Water leaked pipeline label 48 is for example indicated by a thick line in Fig. 11.

Unit 27 configured to create pipeline network data with a water leakage accident history outputs pipeline network data with water leakage accident history 50 to storage unit 30. Pipeline network data with water leakage accident history 50 is stored in storage unit 30. Unit 27 configured to create pipeline network data with a water leakage accident history may output pipeline network data with water leakage accident history 50 to display 14 (see Fig. 1) to cause display 14 to display pipeline network data with water leakage accident history 50. Pipeline network data with water leakage accident history 50 may be provided to a customer through the Internet or storage medium 18.

Storage unit 30 is implemented by storage 19 (see Fig. 1) or storage medium 18 (see Fig. 1). Storage unit 30 for example stores pipeline network data 31, water leakage accident data 36, map data 40, pipeline network data with water leakage accident history 50, and program 55.

### <Method for Creating Pipeline Network Data with Water Leakage Accident History>

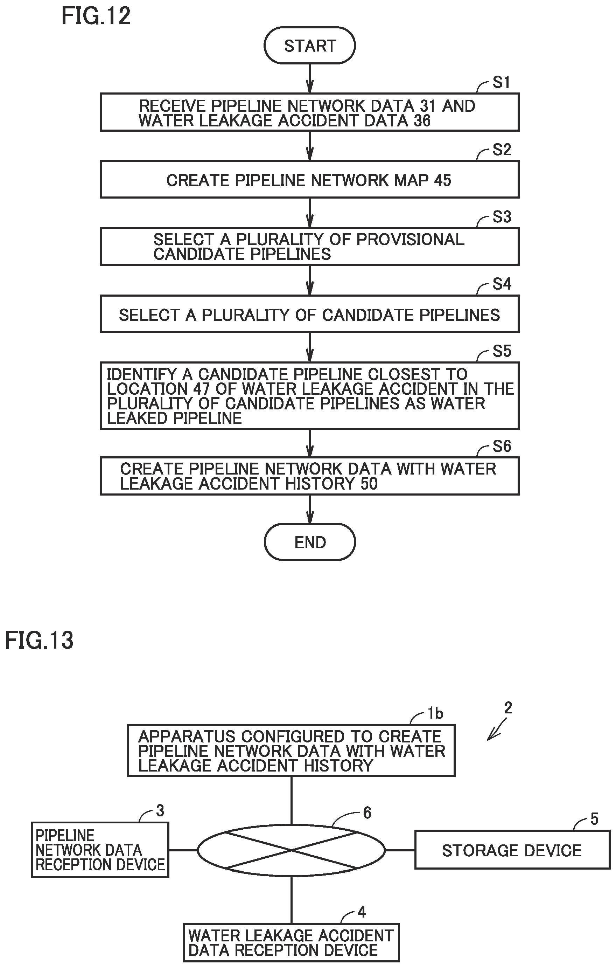

A method for creating pipeline network data with a water leakage accident history according to the present embodiment will now be described with reference to Fig. 12.

Pipeline network data 31 and water leakage accident data 36 are received from a customer such as a water utility (step S1). Specifically, pipeline network data reception unit 21 receives pipeline network data 31 from the customer. Water leakage accident data reception unit 22 receives water leakage accident data 36 from the customer. Pipeline network data 31 and water leakage accident data 36 are provided from the customer through the Internet or storage medium 18. Pipeline network data reception unit 21 outputs pipeline network data 31 to storage unit 30. Pipeline network data 31 is stored in storage unit 30. Water leakage accident data reception unit 22 outputs water leakage accident data 36 to storage unit 30. Water leakage accident data 36 is stored in storage unit 30.

Referring to Fig. 3, pipeline network data 31 is for example pipeline network data table 32. Pipeline network data 31 includes pipeline IDs, first attribute data 33, and locations 34 of a plurality of pipelines configuring a pipeline network. Each pipeline ID is an identifier of a pipeline. Each piece of first attribute data 33 is attribute data of a pipeline, and for example includes a diameter, a pipe material, and a year of installation of the pipeline. Each diameter is a diameter of a pipe configuring a pipeline. Each pipe material is a material of a pipe configuring a pipeline, and may be referred to as a pipe type. The pipe material includes a ductile iron pipe (DIP), a cast iron pipe (CIP), an unplasticized poly vinyl chloride pipe (VP), and a steel pipe (SP). Each year of installation is a year in which a pipeline was installed, such as a year in which the pipeline was buried in the ground. First attribute data 33 of each pipeline may further include a pipeline length indicating a length of the pipeline. Location 34 of each pipeline includes a latitude and longitude of the pipeline.

Referring to Fig. 4, water leakage accident data 36 includes an accident ID of a pipeline having had a water leakage accident, or a water leaked pipeline, a pipeline ID, second attribute data 37, and an address of the water leakage accident. An accident ID is an identifier of a water leakage accident. A pipeline ID of water leakage accident data 36 is a pipeline ID of pipeline IDs of pipeline network data 31 shown in Fig. 3 that identifies a water leaked pipeline. Second attribute data 37 for example includes a diameter, a pipe material, and a year of installation of a water leaked pipeline. Second attribute data 37 may further include a year in which a water leakage accident occurred. An address of a water leakage accident is an address of a location of the water leakage accident.

Referring to Figs. 6 and 12, based on locations 34 of the plurality of pipelines (see Fig. 3) and an address of a water leakage accident (see Fig. 4), the plurality of pipelines and location 47 of a water leakage accident corresponding to the address of the water leakage accident are mapped to create pipeline network map 45 (see Fig. 6) (step S2). Specifically, pipeline network map creation unit 23 reads pipeline network data 31 (see Fig. 3), water leakage accident data 36 (see Fig. 4), and map data 40 (see Fig. 5) from storage unit 30. Pipeline network map creation unit 23 refers to latitudes and longitudes of pipeline network data 31 and latitudes and longitudes of map data 40 to map a pipeline network composed of the plurality of pipelines on a map. Pipeline network map creation unit 23 refers to an address of water leakage accident data 36 and an address of map data 40 to map location 47 of a water leakage accident on the map. Thus, pipeline network map creation unit 23 creates pipeline network map 45.

As shown in Fig. 4, water leakage accident data 36 provided from a customer may lack a pipeline ID serving as an identifier of a water leaked pipeline, and insufficiently specify the address of the water leaked pipeline. For example, water leakage accident data 36 provided from a customer may not include a pipeline ID of a water leaked pipeline and a latitude and a longitude of the water leaked pipeline. Water leakage accident data 36 provided from a customer may not specify an address of a water leakage accident for a street number. Furthermore, an area with a low population density may not have an address set sufficiently in detail to identify a pipeline. For this reason, directly reflecting in pipeline network data 31 water leakage accident data 36 provided from a customer may result in location 47 of a water leakage accident deviating from a pipeline, as shown in Fig. 6, and fail to identify the water leaked pipeline.

For example, as shown in Fig. 4 for an accident ID 1, when water leakage accident data 36 does not include a pipeline ID of a water leaked pipeline and only specifies an address of a water leakage accident for a block, pipeline network map creation unit 23 designates a center location of the area of the block as location 47 of the water leakage accident. Location 47 of the water leakage accident deviates from a pipeline, and the water leaked pipeline cannot be identified. Even if water leakage accident data 36 provided from a customer lacks a pipeline ID serving as an identifier of a water leaked pipeline and insufficiently identifies the address of the water leaked pipeline, the water leaked pipeline can be identified more accurately through the following steps S3 to S5.

A water leaked pipeline has a high probability of being located near location 47 of the water leakage accident. Accordingly, referring to Figs. 7 and 12, provisional candidate pipeline selection unit 24 selects from the plurality of pipelines included in pipeline network data 31 a plurality of provisional candidate pipelines located within predetermined distance d from location 47 of the water leakage accident in pipeline network map 45 (step S3). Predetermined distance d is for example any distance from 50 m to 200 m. In Fig. 7, for example, four provisional candidate pipelines (pipeline ID 2, pipeline ID 4, pipeline ID 5, and pipeline ID 7) are selected.

It is highly probable that the water leaked pipeline is one of the plurality of provisional candidate pipelines having first attribute data 33 closest to second attribute data 37 of the water leaked pipeline. Accordingly, referring to Figs. 8 and 12, candidate pipeline selection unit 25 selects from the plurality of provisional candidate pipelines a plurality of candidate pipelines having first attribute data 33 closest to second attribute data 37 of the water leaked pipeline (step S4). For example, candidate pipeline selection unit 25 compares first attribute data 33 of the plurality of provisional candidate pipelines with second attribute data 37 of the water leaked pipeline, and selects as a plurality of candidate pipelines any of the plurality of provisional candidate pipelines having a diameter, a pipe material, and a year of installation that match the diameter, pipe material, and year of installation of the water leaked pipeline. In Fig. 8, for example, two candidate pipelines (pipeline ID 2 and pipeline ID 5) are selected.

The water leaked pipeline has a high probability of being located near location 47 of the water leakage accident. Accordingly, referring to Figs. 9 and 12, water leaked pipeline identification unit 26 identifies a candidate pipeline closest to location 47 of the water leakage accident in the plurality of candidate pipelines as the water leaked pipeline (step S5). In Fig. 9, for example, pipeline ID 2 is identified as the water leaked pipeline.

Referring to Figs. 10 to 12, unit 27 configured to create pipeline network data with a water leakage accident history creates pipeline network data with water leakage accident history 50 by adding to pipeline network data 31 a water leakage accident history indicating that the identified candidate pipeline of the plurality of pipelines is the water leaked pipeline (step S6). Pipeline network data with water leakage accident history 50 may be table 51 of pipeline network data with a water leakage accident history (see Fig. 10), or may be pipeline network map 52 with a water leakage accident history (see Fig. 11). Table 51 of pipeline network data with a water leakage accident history and pipeline network map 52 with a water leakage accident history each include pipeline IDs, first attribute data 33, locations 34, and water leakage accident histories for the plurality of pipelines.

Unit 27 configured to create pipeline network data with a water leakage accident history creates table 51 of pipeline network data with a water leakage accident history (see Fig. 10) by adding the water leakage accident history to pipeline network data table 32 (see Fig. 3). For example, unit 27 configured to create pipeline network data with a water leakage accident history adds the water leakage accident history to pipeline network data table 32 by inputting "1" in the column of the water leakage accident history at a field of the pipeline identified as the water leaked pipeline by water leaked pipeline identification unit 26, and inputting "0" in the column of the water leakage accident history at a field of a pipeline that is not identified as the water leaked pipeline.

Unit 27 configured to create pipeline network data with a water leakage accident history creates pipeline network map 52 with the water leakage accident history (see Fig. 11) from map data (see Fig. 5) and table 51 of pipeline network data with a water leakage accident history (see Fig. 10). For example, unit 27 configured to create pipeline network data with a water leakage accident history maps a pipeline network composed of a plurality of pipelines on a map with reference to latitudes and longitudes of table 51 of pipeline network data with the water leakage accident history and latitudes and longitudes of map data 40. Unit 27 configured to create pipeline network data with a water leakage accident history adds water leaked pipeline label 48 to the pipeline network map indicating that a pipeline indicated in table 51 of pipeline network data with the water leakage accident history having "1" input in the column of the water leakage accident history at the field of the pipeline is the water leaked pipeline. Water leaked pipeline label 48 is an example of a water leakage accident history. Water leaked pipeline label 48 is for example indicated by a thick line in Fig. 11.

Unit 27 configured to create pipeline network data with a water leakage accident history outputs pipeline network data with water leakage accident history 50 to storage unit 30. Pipeline network data with water leakage accident history 50 is stored in storage unit 30. Unit 27 configured to create pipeline network data with a water leakage accident history may output pipeline network data with water leakage accident history 50 to display 14 (see Fig. 1) to cause display 14 to display pipeline network data with water leakage accident history 50. Pipeline network data with water leakage accident history 50 may be provided to a customer through the Internet or storage medium 18.

Program 55 (see Fig. 2) causes processor 12 (see Fig. 1) to execute each step of a method for creating pipeline network data with a water leakage accident history according to the present embodiment. Pipeline network data reception unit 21, water leakage accident data reception unit 22, pipeline network map creation unit 23, provisional candidate pipeline selection unit 24, candidate pipeline selection unit 25, water leaked pipeline identification unit 26, and unit 27 configured to create pipeline network data with a water leakage accident history shown in Fig. 2 are implemented by processor 12 executing program 55.

Program 55 may be stored in a computer-readable storage medium 18 (a non-transitory computer-readable storage medium) according to the present embodiment.

### (Modification)

Referring to Fig. 13, in a modification of the present embodiment, apparatus 1 configured to create pipeline network data with a water leakage accident history may have a function implemented by a system 2 configured to create pipeline network data with a water leakage accident history. System 2 configured to create pipeline network data with a water leakage accident history comprises an apparatus 1b configured to create pipeline network data with a water leakage accident history, a pipeline network data reception device 3, a water leakage accident data reception device 4, and a storage device 5. Apparatus 1b configured to create pipeline network data with a water leakage accident history, pipeline network data reception device 3, water leakage accident data reception device 4, and storage device 5 are communicably interconnected through a communication network 6 such as the Internet or an intranet. Apparatus 1b configured to create pipeline network data with a water leakage accident history, pipeline network data reception device 3, and water leakage accident data reception device 4 each have a hardware configuration identical to that shown in Fig. 1. Storage device 5 for example includes a hard disk or storage medium drive 17.

Apparatus 1b configured to create pipeline network data with a water leakage accident history has a function of pipeline network map creation unit 23 (see Fig. 2), provisional candidate pipeline selection unit 24 (see Fig. 2), candidate pipeline selection unit 25 (see Fig. 2), water leaked pipeline identification unit 26 (see Fig. 2), and unit 27 configured to create pipeline network data with a water leakage accident history (see Fig. 2). Pipeline network data reception device 3 has a function of pipeline network data reception unit 21 (see Fig. 2). Water leakage accident data reception device 4 has a function of water leakage accident data reception unit 22 (see Fig. 2). Storage device 5 has a function of storage unit 20 (see Fig. 2).

According to the present embodiment, apparatuses 1, 1b configured to create pipeline network data with a water leakage accident history, the method for creating pipeline network data with a water leakage accident history, and program 55 have an effect as described hereinafter.

According to the present embodiment, apparatuses 1, 1b configured to create pipeline network data with a water leakage accident history comprises pipeline network map creation unit 23, provisional candidate pipeline selection unit 24, candidate pipeline selection unit 25, and water leaked pipeline identification unit 26. Pipeline network map creation unit 23 maps, based on locations 34 of the plurality of pipelines and an address of a water leakage accident, the plurality of pipelines and location 47 of a water leakage accident corresponding to the address of the water leakage accident to create pipeline network map 45. Pipeline network data 31 includes pipeline IDs, first attribute data 33, and locations 34 of the plurality of pipelines. Locations 34 of the plurality of pipelines include latitudes and longitudes of the plurality of pipelines. Water leakage accident data 36 includes second attribute data 37 of a pipeline having had a water leakage accident, or a water leaked pipeline, and an address of the water leakage accident. Water leakage accident data 36 does not include a pipeline ID of the water leaked pipeline and a latitude and longitude of the water leaked pipeline. Provisional candidate pipeline selection unit 24 selects from the plurality of pipelines a plurality of provisional candidate pipelines located within predetermined distance d from location 47 of the water leakage accident in pipeline network map 45. Candidate pipeline selection unit 25 selects from the plurality of provisional candidate pipelines a plurality of candidate pipelines having first attribute data 33 closest to second attribute data 37 of the water leaked pipeline. Water leaked pipeline identification unit 26 identifies a candidate pipeline closest to location 47 of the water leakage accident in the plurality of candidate pipelines as the water leaked pipeline.

Apparatuses 1, 1b configured to create pipeline network data with a water leakage accident history comprises provisional candidate pipeline selection unit 24, candidate pipeline selection unit 25, and water leaked pipeline identification unit 26. Even if a pipeline ID serving as an identifier of a water leaked pipeline lacks and the address of the water leaked pipeline is insufficiently identified, apparatuses 1, 1b configured to create pipeline network data with a water leakage accident history can identify the water leaked pipeline more accurately. As the water leaked pipeline is identified using a computer, rather than manually, the water leaked pipeline can be identified quickly without human error. Furthermore, provisional candidate pipeline selection unit 24, candidate pipeline selection unit 25, and water leaked pipeline identification unit 26 narrow down candidates for the water leaked pipeline stepwise, and the water leaked pipeline can be quickly identified even if pipeline network data 31 includes a large number of pipelines having identical attributes.

Pipeline network data with water leakage accident history 50 obtained through apparatuses 1, 1b configured to create the pipeline network data with the water leakage accident history can be used to more accurately create a water leakage accident prediction model, a pipeline maintenance plan, and a pipeline renewal plan more quickly.

For apparatuses 1, 1b configured to create pipeline network data with a water leakage accident history according to the present embodiment, first attribute data 33 includes diameters, pipe materials, and years of installation of the plurality of pipelines. Second attribute data 37 includes a diameter, a pipe material, and a year of installation of the water leaked pipeline.

Even if a pipeline ID serving as an identifier of a water leaked pipeline lacks and the address of the water leaked pipeline is insufficiently identified, apparatuses 1, 1b configured to create pipeline network data with a water leakage accident history can identify the water leaked pipeline more accurately and more quickly. Pipeline network data with water leakage accident history 50 obtained through apparatuses 1, 1b configured to create the pipeline network data with the water leakage accident history can be used to more quickly create a more accurate water leakage accident prediction model, a more accurate pipeline maintenance plan, and a more accurate pipeline renewal plan.

For apparatuses 1, 1b configured to create pipeline network data with a water leakage accident history according to the present embodiment, predetermined distance d is any distance from 50 m to 200 m.

Even if a pipeline ID serving as an identifier of a water leaked pipeline lacks and the address of the water leaked pipeline is insufficiently identified, apparatuses 1, 1b configured to create pipeline network data with a water leakage accident history can identify the water leaked pipeline more accurately and more quickly. Pipeline network data with water leakage accident history 50 obtained through apparatuses 1, 1b configured to create the pipeline network data with the water leakage accident history can be used to more quickly create a more accurate water leakage accident prediction model, a more accurate pipeline maintenance plan, and a more accurate pipeline renewal plan.

Apparatuses 1, 1b configured to create pipeline network data with a water leakage accident history according to the present embodiment further comprises unit 27 configured to create pipeline network data with a water leakage accident history. Unit 27 configured to create pipeline network data with a water leakage accident history creates pipeline network data with water leakage accident history 50 by adding to pipeline network data 31 a water leakage accident history indicating that the identified candidate pipeline of the plurality of pipelines is the water leaked pipeline.

Pipeline network data with water leakage accident history 50 including data of a water leaked pipeline identified more accurately can be provided to a customer. This allows a more accurate water leakage accident prediction model, a more accurate pipeline maintenance plan, and a more accurate pipeline renewal plan to be created more quickly.

For apparatuses 1, 1b configured to create pipeline network data with a water leakage accident history according to the present embodiment, pipeline network data with water leakage accident history 50 is table 51 of pipeline network data with a water leakage accident history or pipeline network map 52 with a water leakage accident history, that includes pipeline IDs, first attribute data 33, and locations 34 of the plurality of pipelines, and the water leakage accident history.

Pipeline network data with water leakage accident history 50 including data of a water leaked pipeline identified more accurately can be provided to a customer in a comprehensive manner.

According to the present embodiment, a method for creating pipeline network data with a water leakage accident history comprises the step of mapping, based on locations 34 of the plurality of pipelines and an address of a water leakage accident, the plurality of pipelines and location 47 of a water leakage accident corresponding to the address of the water leakage accident to create pipeline network map 45 (step S2). Pipeline network data 31 includes pipeline IDs, first attribute data 33, and locations 34 of the plurality of pipelines. Locations 34 of the plurality of pipelines include latitudes and longitudes of the plurality of pipelines. Water leakage accident data 36 includes second attribute data 37 of a pipeline having had a water leakage accident, or a water leaked pipeline, and an address of the water leakage accident. Water leakage accident data 36 does not include a pipeline ID of the water leaked pipeline and a latitude and longitude of the water leaked pipeline. The method for creating pipeline network data with a water leakage accident history according to the present embodiment comprises the steps of selecting from the plurality of pipelines a plurality of provisional candidate pipelines located within predetermined distance d from location 47 of the water leakage accident in pipeline network map 45 (step S3); selecting from the plurality of provisional candidate pipelines a plurality of candidate pipelines having first attribute data 33 closest to second attribute data 37 of the water leaked pipeline (step S4); and identifying a candidate pipeline closest to location 47 of the water leakage accident in the plurality of candidate pipelines as the water leaked pipeline (step S5).

The method for creating pipeline network data with a water leakage accident history according to the present embodiment comprises the steps of: selecting a plurality of provisional candidate pipelines from a plurality of pipelines (step S3); selecting a plurality of candidate pipelines from the plurality of provisional candidate pipelines (step S4); and identifying a candidate pipeline closest to location 47 of the water leakage accident in the plurality of candidate pipelines as the water leaked pipeline (step S5). Even if a pipeline ID serving as an identifier of a water leaked pipeline lacks and the address of the water leaked pipeline is insufficiently identified, the water leaked pipeline can be identified more accurately. As the water leaked pipeline is identified using a computer, rather than manually, the water leaked pipeline can be identified quickly without human error. Furthermore, the steps of: selecting a plurality of provisional candidate pipelines from a plurality of pipelines (step S3); selecting a plurality of candidate pipelines from the plurality of provisional candidate pipelines (step S4); and identifying a candidate pipeline closest to location 47 of the water leakage accident in the plurality of candidate pipelines as the water leaked pipeline (step S5) can narrow down candidates for the water leaked pipeline stepwise, and thus quickly identify the water leaked pipeline even if pipeline network data 31 includes a large number of pipelines having identical attributes.

Pipeline network data with water leakage accident history 50 obtained in the method for creating pipeline network data with a water leakage accident history according to the present embodiment can be used to more accurately create a water leakage accident prediction model, a pipeline maintenance plan, and a pipeline renewal plan more quickly.

In the method for creating pipeline network data with a water leakage accident history according to the present embodiment, first attribute data 33 includes diameters, pipe materials, and years of installation of the plurality of pipelines. Second attribute data 37 includes a diameter, a pipe material, and a year of installation of the water leaked pipeline.

Even if a pipeline ID serving as an identifier of a water leaked pipeline lacks and the address of the water leaked pipeline is insufficiently identified, the water leaked pipeline can be identified more accurately and more quickly. Pipeline network data with water leakage accident history 50 obtained in the method for creating pipeline network data with a water leakage accident history according to the present embodiment can be used to more accurately create a water leakage accident prediction model, a pipeline maintenance plan, and a pipeline renewal plan more quickly.

In the method for creating pipeline network data with a water leakage accident history according to the present embodiment, predetermined distance d is any distance from 50 m to 200 m.

Even if a pipeline ID serving as an identifier of a water leaked pipeline lacks and the address of the water leaked pipeline is insufficiently identified, the water leaked pipeline can be identified more accurately and more quickly. Pipeline network data with water leakage accident history 50 obtained in the method for creating pipeline network data with a water leakage accident history according to the present embodiment can be used to more accurately create a water leakage accident prediction model, a pipeline maintenance plan, and a pipeline renewal plan more quickly.

The method for creating pipeline network data with a water leakage accident history according to the present embodiment further comprises the step of creating pipeline network data with water leakage accident history 50 by adding to pipeline network data 31 a water leakage accident history indicating that the identified candidate pipeline of the plurality of pipelines is the water leaked pipeline (step S6).

Pipeline network data with water leakage accident history 50 including data of a water leaked pipeline identified more accurately can be provided to a customer. This allows a more accurate water leakage accident prediction model, a more accurate pipeline maintenance plan, and a more accurate pipeline renewal plan to be created more quickly.

**In** the method for creating pipeline network data with a water leakage accident history according to the present embodiment, pipeline network data with water leakage accident history 50 is table 51 of pipeline network data with a water leakage accident history or pipeline network map 52 with a water leakage accident history, that includes pipeline IDs, first attribute data 33, and locations 34 of the plurality of pipelines, and the water leakage accident history.

Pipeline network data with water leakage accident history 50 including data of a water leaked pipeline identified more accurately can be provided to a customer in a comprehensive manner.

According to the present embodiment, program 55 causes processor 12 to execute each step of the method for creating pipeline network data with a water leakage accident history according to the present embodiment.

Even if a pipeline ID serving as an identifier of a water leaked pipeline lacks and the address of the water leaked pipeline is insufficiently identified, the water leaked pipeline can be identified more accurately and more quickly. Pipeline network data with water leakage accident history 50 obtained by processor 12 executing program 55 according to the present embodiment can be used to more accurately create a water leakage accident prediction model, a pipeline maintenance plan, and a pipeline renewal plan more quickly.

A variety of aspects of the present disclosure are summarized and described below as additional notes.

### (Additional Note 1)

An apparatus configured to create pipeline network data with a water leakage accident history, comprising:
a pipeline network map creation unit configured to map, based on locations of a plurality of pipelines and an address of a water leakage accident, the plurality of pipelines and a location of a water leakage accident corresponding to the address of the water leakage accident to create a pipeline network map, wherein pipeline network data includes pipeline IDs, first attribute data, and locations of the plurality of pipelines, the locations of the plurality of pipelines include latitudes and longitudes of the plurality of pipelines, water leakage accident data includes second attribute data of a water leaked pipeline that is a pipeline having had the water leakage accident, and the address of the water leakage accident, the water leakage accident data does not include a pipeline ID of the water leaked pipeline and a latitude and longitude of the water leaked pipeline;
a provisional candidate pipeline selection unit configured to select from the plurality of pipelines a plurality of provisional candidate pipelines located within a predetermined distance from the location of the water leakage accident in the pipeline network map;
a candidate pipeline selection unit configured to select from the plurality of provisional candidate pipelines a plurality of candidate pipelines having the first attribute data closest to the second attribute data of the water leaked pipeline; and
a water leaked pipeline identification unit configured to identify a candidate pipeline closest to the location of the water leakage accident in the plurality of candidate pipelines as the water leaked pipeline.

### (Additional Note 2)

The apparatus configured to create the pipeline network data with the water leakage accident history according to Additional Note 1, wherein
the first attribute data includes diameters, pipe materials, and years of installation of the plurality of pipelines, and
the second attribute data includes a diameter, a pipe material, and a year of installation of the water leaked pipeline.

### (Additional Note 3)

The apparatus configured to create the pipeline network data with the water leakage accident history according to Additional Note 1 or 2, wherein the predetermined distance is any distance from 50 m to 200 m.

### (Additional Note 4)

The apparatus configured to create the pipeline network data with the water leakage accident history according to any one of Additional Notes 1 to 3, further comprising a unit configured to create the pipeline network data with the water leakage accident history by adding to the pipeline network data a water leakage accident history indicating that the identified candidate pipeline of the plurality of pipelines is the water leaked pipeline.

### (Additional Note 5)

The apparatus configured to create the pipeline network data with the water leakage accident history according to Additional Note 4, wherein the pipeline network data with the water leakage accident history is a table of the pipeline network data with the water leakage accident history or a pipeline network map with the water leakage accident history including the pipeline IDs, first attribute data, and locations of the plurality of pipelines, and the water leakage accident history.

### (Additional Note 6)

A method for creating pipeline network data with a water leakage accident history, comprising the steps of:
mapping, based on locations of a plurality of pipelines and an address of a water leakage accident, the plurality of pipelines and a location of a water leakage accident corresponding to the address of the water leakage accident to create a pipeline network map, wherein pipeline network data includes pipeline IDs, first attribute data, and locations of the plurality of pipelines, the locations of the plurality of pipelines include latitudes and longitudes of the plurality of pipelines, water leakage accident data includes second attribute data of a water leaked pipeline that is a pipeline having had the water leakage accident, and the address of the water leakage accident, the water leakage accident data does not include a pipeline ID of the water leaked pipeline and a latitude and longitude of the water leaked pipeline;
selecting from the plurality of pipelines a plurality of provisional candidate pipelines located within a predetermined distance from the location of the water leakage accident in the pipeline network map;
selecting from the plurality of provisional candidate pipelines a plurality of candidate pipelines having the first attribute data closest to the second attribute data of the water leaked pipeline; and
identifying a candidate pipeline closest to the location of the water leakage accident in the plurality of candidate pipelines as the water leaked pipeline.

### (Additional Note 7)

The method for creating the pipeline network data with the water leakage accident history according to Additional Note 6, wherein
the first attribute data includes diameters, pipe materials, and years of installation of the plurality of pipelines, and
the second attribute data includes a diameter, a pipe material, and a year of installation of the water leaked pipeline.

### (Additional Note 8)

The method for creating the pipeline network data with the water leakage accident history according to Additional Note 6 or 7, wherein the predetermined distance is any distance from 50 m to 200 m.

### (Additional Note 9)

The method for creating the pipeline network data with the water leakage accident history according to any one of Additional Notes 6 to 8, further comprising the step of creating the pipeline network data with the water leakage accident history by adding to the pipeline network data a water leakage accident history indicating that the identified candidate pipeline of the plurality of pipelines is the water leaked pipeline.

### (Additional Note 10)

The method for creating the pipeline network data with the water leakage accident history according to Additional Note 9, wherein the pipeline network data with the water leakage accident history is a table of the pipeline network data with the water leakage accident history or a pipeline network map with the water leakage accident history including the pipeline IDs, first attribute data, and locations of the plurality of pipelines, and the water leakage accident history.

### (Additional Note 11)

A program that causes a processor to perform each step of the method for creating pipeline network data with a water leakage accident history according to any one of Additional Notes 6 to 10.

The embodiments and modifications thereof disclosed herein are to be considered as illustrative and not limiting in any respect. The scope of the present disclosure is defined by the terms of the claims rather than the description above, and is intended to encompass any modification falling within the meaning and scope equivalent to the terms of the claims.

### REFERENCE SIGNS LIST

1, 1b apparatus configured to create pipeline network data with water leakage accident history, 2 system configured to create pipeline network data with water leakage accident history, 3 pipeline network data reception device, 4 water leakage accident data reception device, 5 storage device, 6 communication network, 11 input device, 12 processor, 13 memory, 14 display, 16 network controller, 17 storage medium drive, 18 storage medium, 19 storage, 21 pipeline network data reception unit, 22 water leakage accident data reception unit, 23 pipeline network map creation unit, 24 provisional candidate pipeline selection unit, 25 candidate pipeline selection unit, 26 water leaked pipeline identification unit, 27 unit configured to create pipeline network data with water leakage accident history, 30 storage unit, 31 pipeline network data, 32 pipeline network data table, 33 first attribute data, 34 location, 36 water leakage accident data, 37 second attribute data, 40 map data, 45 pipeline network map, 47 location of water leakage accident, 48 water leaked pipeline label, 50 pipeline network data with water leakage accident history, 51 table of pipeline network data with water leakage accident history, 52 pipeline network map with water leakage accident history, 55 program.

## Claims

1. An apparatus configured to create pipeline network data with a water leakage accident history, comprising:
a pipeline network map creation unit configured to map, based on locations of a plurality of pipelines and an address of a water leakage accident, the plurality of pipelines and a location of a water leakage accident corresponding to the address of the water leakage accident to create a pipeline network map, wherein pipeline network data includes pipeline IDs, first attribute data, and locations of the plurality of pipelines, the locations of the plurality of pipelines include latitudes and longitudes of the plurality of pipelines, water leakage accident data includes second attribute data of a water leaked pipeline that is a pipeline having had the water leakage accident, and the address of the water leakage accident, the water leakage accident data does not include a pipeline ID of the water leaked pipeline and a latitude and longitude of the water leaked pipeline;
a provisional candidate pipeline selection unit configured to select from the plurality of pipelines a plurality of provisional candidate pipelines located within a predetermined distance from the location of the water leakage accident in the pipeline network map;
a candidate pipeline selection unit configured to select from the plurality of provisional candidate pipelines a plurality of candidate pipelines having the first attribute data closest to the second attribute data of the water leaked pipeline; and
a water leaked pipeline identification unit configured to identify a candidate pipeline closest to the location of the water leakage accident in the plurality of candidate pipelines as the water leaked pipeline.

2. The apparatus configured to create the pipeline network data with the water leakage accident history according to claim 1, wherein
the first attribute data includes diameters, pipe materials, and years of installation of the plurality of pipelines, and
the second attribute data includes a diameter, a pipe material, and a year of installation of the water leaked pipeline.

3. The apparatus configured to create the pipeline network data with the water leakage accident history according to claim 1 or 2, wherein the predetermined distance is any distance from 50 m to 200 m.

4. The apparatus configured to create the pipeline network data with the water leakage accident history according to any one of claims 1 to 3, further comprising a unit configured to create the pipeline network data with the water leakage accident history by adding to the pipeline network data a water leakage accident history indicating that the identified candidate pipeline of the plurality of pipelines is the water leaked pipeline.

5. The apparatus configured to create the pipeline network data with the water leakage accident history according to claim 4, wherein the pipeline network data with the water leakage accident history is a table of the pipeline network data with the water leakage accident history or a pipeline network map with the water leakage accident history including the pipeline IDs, first attribute data, and locations of the plurality of pipelines, and the water leakage accident history.

6. A method for creating pipeline network data with a water leakage accident history, comprising the steps of:
mapping, based on locations of a plurality of pipelines and an address of a water leakage accident, the plurality of pipelines and a location of a water leakage accident corresponding to the address of the water leakage accident to create a pipeline network map, wherein pipeline network data includes pipeline IDs, first attribute data, and locations of the plurality of pipelines, the locations of the plurality of pipelines include latitudes and longitudes of the plurality of pipelines, water leakage accident data includes second attribute data of a water leaked pipeline that is a pipeline having had the water leakage accident, and the address of the water leakage accident, the water leakage accident data does not include a pipeline ID of the water leaked pipeline and a latitude and longitude of the water leaked pipeline;
selecting from the plurality of pipelines a plurality of provisional candidate pipelines located within a predetermined distance from the location of the water leakage accident in the pipeline network map;
selecting from the plurality of provisional candidate pipelines a plurality of candidate pipelines having the first attribute data closest to the second attribute data of the water leaked pipeline; and
identifying a candidate pipeline closest to the location of the water leakage accident in the plurality of candidate pipelines as the water leaked pipeline.

7. The method for creating the pipeline network data with the water leakage accident history according to claim 6, wherein
the first attribute data includes diameters, pipe materials, and years of installation of the plurality of pipelines, and
the second attribute data includes a diameter, a pipe material, and a year of installation of the water leaked pipeline.

8. The method for creating the pipeline network data with the water leakage accident history according to claim 6 or 7, wherein the predetermined distance is any distance from 50 m to 200 m.

9. The method for creating the pipeline network data with the water leakage accident history according to any one of claims 6 to 8, further comprising the step of creating the pipeline network data with the water leakage accident history by adding to the pipeline network data a water leakage accident history indicating that the identified candidate pipeline of the plurality of pipelines is the water leaked pipeline.

10. The method for creating the pipeline network data with the water leakage accident history according to claim 9, wherein the pipeline network data with the water leakage accident history is a table of the pipeline network data with the water leakage accident history or a pipeline network map with the water leakage accident history including the pipeline IDs, first attribute data, and locations of the plurality of pipelines, and the water leakage accident history.

11. A program that causes a processor to perform each step of the method for creating pipeline network data with a water leakage accident history according to any one of claims 6 to 10.
